# EUROPEAN PATENT SPECIFICATION

(11) **EP 3 593 640 B1**
(45) Date of publication and mention of the grant of the patent: **16.09.2020**
(21) Application number: 19189357.7
(22) Date of filing: 17.11.2011
(51) Int. Cl.: A22C 5/00, A22C 17/00, A23K 10/26, A23L 13/40, A23L 17/00, A23L 13/60, A23L 13/20, A23K 50/48, A23K 10/22

(54) **FOAMED MEAT OR FISH PRODUCT**
AUFGESCHÄUMTES FLEISCH- ODER FISCHPRODUKT
MOUSSE DE VIANDE OU DE POISSON

(30) Priority: 06.12.2010 DE 102010053549
(43) Date of publication of application: 15.01.2020
(62) Divisional of application: 11788048.4
(73) Proprietor: Mars, Incorporated, McLean, VA 22101-3883 (US)
(72) Inventor: Schlebusch, Johannes, 27321 Thedinghausen (DE)
(74) Representative: Scholz, Volker

(56) References cited:
- EP-A2- 1 289 638
- WO-A1-2011/157414
- GB-A- 2 141 917
- JP-B2- H0 544 264

## Description

The invention relates to a foamed meat or fish product.

Compared to conventional, compact meat products, a foamed meat product offers a number of advantages, especially in the field of pet food. The light, smooth structure already gives the food a pleasant appearance. The increased volume and the reduced density of a foamed meat product also results in a reduction in the calorie density and the specific calorie content within a particular volume, as a result of which it is easier to maintain or reduce a given body weight. In addition, it results in a changed taste experience while eating, improved digestion and also, in the case of certain species, such as cats or dogs, which tend to have a less than ideal liquid intake, it creates the possibility of improving the intake of liquid, together with the solid food.

Especially in the production of pet food products, the problem exists that, on the one hand, it is desirable also to use less expensive parts such as animal by-products as the starting material, while, on the other hand, pieces of bone or cartilage may lead to clogging or damage and other difficulties in apparatuses of the kind conventionally used for foaming meat mixtures.

The presence of pieces of bone or cartilage and possibly other problematic parts in meat emulsions produced on an industrial scale is probably also the reason why right down to the present day, no industrially homogeneously foamed meat products have become established on the market. This is the reason why in the patent literature (e.g. JP2219562A, US6475551B2) on the foaming of meat products, either only silent cutters, bowl choppers or pressurised gas-sing are used, because these processes are not excessively disturbed by the parts mentioned. The foam structure obtained with these processes is inhomogeneous, however, and is not stable. It is not possible to produce fine, stable foams from highly viscous liquids foams in this way.

The processes mentioned therefore only use meat with the sinews removed, without bones or pieces of bone or pure muscle tissue (lean meat). Formulations consisting of high-price materials of this kind and containing no bones or pieces of cartilage are then foamed using conventional rotor-stator systems (e.g. Hansa-Mixer, Mondo-Mix). The conventional foaming systems are therefore not suitable for foaming formulations containing pieces of cartilage or bone, since the pieces collect around the pins (fingers) of the rotors and around the pins (fingers) of the stators or between the pins of the mixers, which then jam. Moreover, because of the chunky parts, considerable wear is caused to the rotor and stator members.

It is known from EP 1289 638 B1 to disperse liquids with gases by deliberately causing cavitation.

WO 2011/157414 A1 (document according to Art. 54(3) EPC) discloses a method for producing a foamed meat product, starting from a raw material containing comminuted meat or fish and strand-like connective tissue components.

GB 2141917 A discloses sterile porous food products based on ground fish.

JP H 0544264 B2 discloses a cavitation apparatus to create a fish or meat paste containing finely dispersed air or nitrogen bubbles.

The invention discloses a foamed meat or fish product according to claim 1.

There is provided a process for producing a foamed meat product, comprising the steps of: delivering a pumpable starting material containing comminuted meat and pieces of bone or cartilage to a dispersing apparatus having a chamber with a cylindrical rotor disposed therein, which is provided, on its periphery, with a number of indentations to generate cavitation, supplying a gas to the dispersing apparatus, operating the dispersing apparatus while generating cavitation and dispersing the gas supplied, in the process of which the pieces of bone or cartilage are passed through the chamber in particular without comminution, and generating a foamed meat product containing pieces of bone or cartilage.

So that meat-containing foams remain stable for an adequate storage time, i.e. retaining their texture, the viscosity of the liquid phase must be as high as possible and the gas bubbles as small as possible. Separation processes resulting from the differences in density can be delayed in this way. For long-term stability, the liquid phase of the foam must be converted into a solid phase. In the present invention, this is achieved by a heating step or sterilisation, in which the proteins of the meat, fish and slaughterhouse by-products are denatured and gelled. The conventional rotor/stator foaming processes are also only suitable to a limited extent for foaming highly viscous media, since high pumping pressures are required in order to over-come the small gaps resulting from the necessary high speeds with the maximum number of pins on the rotor and stator. Excessive heating of the product, combined with thermal damage to the proteins, then leads to a reduced solidification of the proteins in the foam during sterilisation and results in a less stable foam. Similarly, it is not possible to achieve stable foams with low densities of 0.4 to 0.6 g/ml with these processes.

A mixing and foaming apparatus known as the "Hansa-Mischer" uses rotor and stator members covered with pins, where rotor pins have a square 6 x 6 mm cross-section, for example. By way of example, 1.5 mm upstream and downstream of a pin in each case is the distance from the stator pins. Low densities require high speeds with the maximum number of pins possible. With a wider pin spacing and low speeds, parts can be passed through, but in this way, with sufficiently high viscosities (necessary in order to stabilise the foam), it is not possible to obtain stable foams with small gas bubble sizes. The use, in accordance with the invention, of the cavitation rotor makes it possible to foam highly viscous formulations and to achieve small, homogeneously distributed gas bubbles.

The viscosities of the meat emulsions in accordance with the invention and the foams obtained are at least 5,000, 10,000, 15,000, 20,000, 25,000, 30,000, 35,000, 40,000, 45,000 or 50,000 cP at 20° C, and, by way of example, 10,000 - 40,000 cP, preferably 15,000 to 35,000 cP, especially 16,000 to 34,000 cP, most particularly 20,000 cP to 34,000 cP. Measurements can be made with a Brookfield R+S rheometer with spindle 6 at 20 r.p.m. at a foam temperature of 20° C and a density of approx. 0.5 g/ml.

The chunky components mentioned, such as in the form of pieces or splinters of bone or cartilage, especially containing collagen of types I, II, V, VI, VIII, IX, X, XI, XXVII, may have a length or diameter (largest diameter) in the starting material or in the foamed meat product of at least 0.3 mm, 1 mm, 3 mm, 5 mm or 10 mm, such as in the range from 0.3 mm to 20 mm, 0.3 mm to 10 mm, 0.3 mm to 6 mm, 0.3 mm to 3 mm or 0.3 mm to 1.5 mm, and they may be present in a proportion of at least 0.5 % by weight, 1 % by weight, 2 % by weight, 5 % by weight, 10 % by weight, 20 % by weight or 25 % by weight in the non-sterilised state, or in a proportion of at least 0.1 % by weight, 0.2 % by weight, 0.5 % by weight, 1 % by weight, 2 % by weight or 5 % by weight in the sterilised state, based in each case on the dry substance, preferably determined by washing out over a screen with a mesh width of 0.3 mm.

It may be contemplated that additives such as water, fat, oil, salt, emulsifiers, spices, gels, plant components, leaves or fibres, vegetables, cereals, starch, hydrocolloids, proteins, minerals, colorants and preservatives in comminuted or uncomminuted form are metered into the starting material, especially before its entry into the dispersing apparatus.

It is expedient, after starting or restarting the dispersing apparatus, for an amount of meat product corresponding to about one to 1.5 times the free content of the chamber of the dispersing apparatus to be returned to the starting material.

It is advantageous for the starting material to be lowered to a temperature of less than 45° C, preferably less than 35° C, 25° C, 20° C, 17° C, 15° C or between 2° and 8° C, especially to 5° C before it enters the dispersing apparatus.

The dispersing apparatus is operated in such a way that a density of the meat or fish product of 0.3 to 0.95 g/ml, preferably from 0.4 to 0.8 g/ml and particularly preferably from 0.45 to 0.75 g/ml results.

It may be contemplated that the meat or fish product produced is delivered to a metering apparatus and filled in containers after it emerges from the dispersing apparatus. In some formulations, it may be contemplated that after the meat or fish product produced emerges from the dispersing apparatus, i.e. while it is being delivered from the dispersing apparatus to a metering apparatus, for example, it is conveyed continuously at an overpressure and is thus exposed to an overpressure, which may lie in a range from 0.5 to 6.0 bar, preferably from 1.0 to 5.0 bar and more preferably from 2.0 to 4.0 bar. Other (stable) formulations may be filled at normal pressure or a slight vacuum (0.7 bar or higher).

The invention preferably contemplates that after a first partial stream of the meat or fish product produced emerges from the dispersing apparatus, it is mixed with an additive, such as a colorant, and is passed through a static mixing apparatus. After the partial stream emerges from the static mixing apparatus, it may be delivered, together with a second partial stream of the meat or fish product produced, to a mixing head, so that partial strands of a stream of material produced with different compositions, such as different colours, can be formed.

It may be contemplated that as the gas, helium, hydrogen, nitrogen, air, oxygen, argon, NH₃, N₂O, CO₂ or any mixture of one or more of those gases is used.

It is preferably proposed that if there should be any interruption of the filling process, the meat or fish product produced is circulated for a predetermined time from the output of the dispersing apparatus, through a cooling apparatus, to the inlet of the dispersing apparatus. In the process, it is in particular proposed that the meat product is cooled.

The foamed meat or fish product is preferably sterilised at a temperature between 110° C and 130° C for a period of between 10 and 60 minutes. In the sterilised product, an average gas bubble size of 0.1 to 7 mm, preferably from 0.15 to 5 mm, more preferably from 0.2 mm to 3 mm and even more preferably from 0.3 to 2 mm, such as 0.5 to 0.9 mm, is produced.

It may be contemplated that during operation of the metering apparatus, a buffer container is filled with foamed meat or fish product, the metering apparatus is no longer operated after a predetermined filling level of the buffer container is reached, foamed meat or fish product is removed from the buffer container to fill containers, and after a predetermined emptying level of the buffer container is reached, the metering apparatus is operated again, and the buffer container is again filled until the predetermined filling level is reached.

It is expedient for the density of the meat or fish product produced to be determined continuously and for the amount of the gas to be supplied to be fixed on that basis.

There is also provided an apparatus for producing a foamed meat or fish product, comprising a dispersing apparatus with a chamber with a cylindrical rotor disposed therein, which is provided on its periphery with a number of indentations to generate cavitation, with a delivery pump connected to an inlet of the dispersing apparatus, a gas delivery apparatus being disposed between the delivery pump and the inlet, and with a return line extending from an outlet of the dispersing apparatus to the inlet and with a cooling apparatus disposed in the course of the return line.

It may be contemplated that a metering apparatus for filling metered portions of the foamed meat or fish product into containers is connected to the outlet of the dispersing apparatus.

A density measuring apparatus and/or a pressure measuring apparatus and/or a temperature measuring apparatus may be disposed downstream of the outlet from the dispersing apparatus, preferably between the outlet from the dispersing apparatus and a branch point at which the return line branches off.

A density measuring apparatus and/or a pressure measuring apparatus and/or a temperature measuring apparatus may be disposed upstream of the dispersing apparatus, preferably be-tween the delivery pump and the inlet to the dispersing apparatus.

Between the outlet from the dispersing apparatus and the metering apparatus, two partial stream branches may be formed, a first partial stream branch being connected to a first inlet of a mixing head, and a second partial stream branch containing a feeder for additives, such as colorants, and a static mixing apparatus, and being connected to a second inlet of the mixing head.

The static mixing apparatus may possess a central canal or passage and mixing fingers pointing diagonally downwards into it.

The invention relates to a foamed meat or fish product containing minced meat or fish and pieces of bone or cartilage. In the sterilised state (heated to between 110° C and 130° C for 10 to 50 minutes), the meat or fish product contains an average gas bubble size of 0.1 to 7 mm, more preferably from 0.2 mm to 3 mm, even more preferably from 0.3 to 2 mm, and especially 0.4 to 0.9 mm. The sterilised meat or fish product has a weight ratio of pieces of bone or cartilage with a length or diameter (largest dimension) of more than 0.3 mm, more than 1 mm, more than 3 mm, more than 5 mm or more than 10 mm of 0.10 % by weight to 25 % by weight, especially 0.11 % by weight to 10 % by weight, 0.12 % by weight to 5 % by weight or 0.13 % by weight to 3 % by weight, based on the dry substance and preferably determined by washing out over a screen with a mesh width of 0.3 mm.

It may be contemplated that the meat product contains unminced pieces of meat with a size of 3 to 20 mm.

In addition, the meat product may contain additives such as water, fat, oil, salt, emulsifiers, spices, gels, vegetable components, leaves or fibres, vegetables, cereals, starch, hydrocolloids, proteins, minerals, colorants and preservatives in comminuted or uncomminuted form.

The invention will now be explained by describing worked embodiments, reference being made to a drawing, in which
Fig. 1 shows an embodiment of an apparatus for producing a foamed meat or fish product.
Fig. 2 shows a section view of a first variant of a dispersing apparatus,
Fig. 3a shows a section view of a second variant of a dispersing apparatus,
Fig. 3b shows a schematic view of the second variant of the dispersing apparatus,
Fig. 3c shows a view of the dispersing apparatus according to Fig. 3b in cross-section,
Fig. 3d shows a perspective view of a rotor of the dispersing apparatus according to Fig. 3b,
Fig. 4 shows details of the supply of gas to the dispersing apparatus,

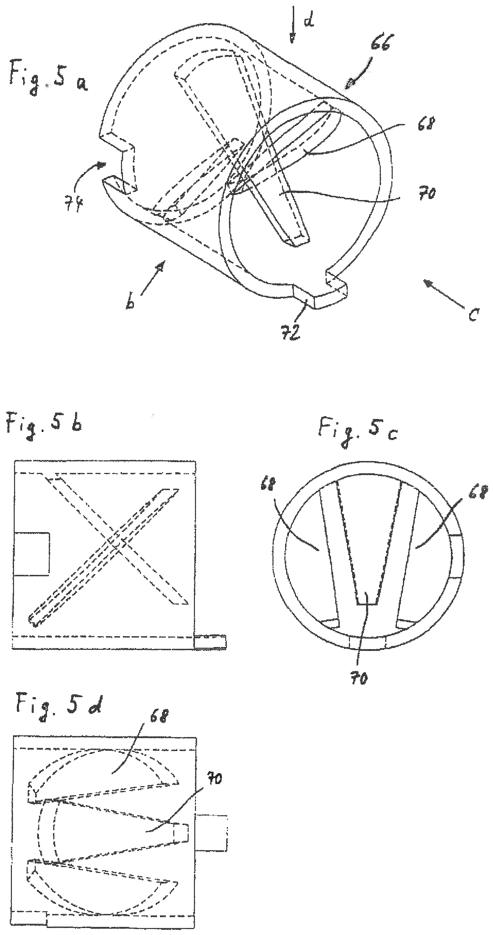

Figs. 5 a-d show a static mixing element in a number of views,
Fig. 6 shows a cumulative frequency distribution of the gas bubble sizes in the foamed, sterilised meat or fish product, and
Fig. 7 shows a detailed gas bubble size distribution.

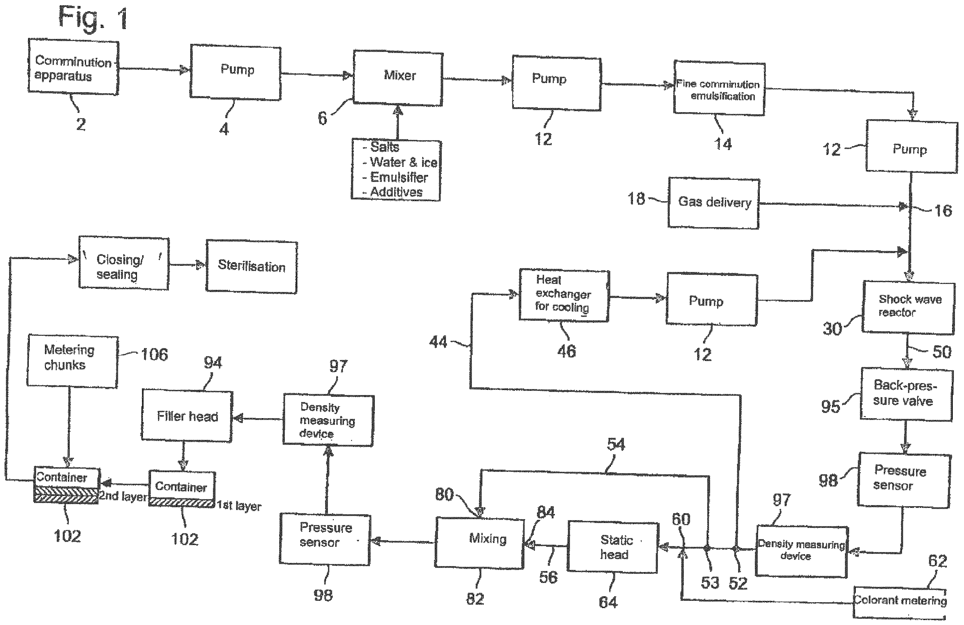

The process and the apparatus will be explained below with reference to the exemplary illustration of an apparatus for producing a meat or fish product in accordance with Fig. 1 which contains gas bubbles or is foamed.

Meat (and/or fish) to be processed in accordance with the invention is supplied in a cooled or frozen state to a comminution apparatus 2, in which it is chopped to a size that makes it possible for it to be processed into a foamed product. Comminution to a size of less than 3 mm, preferably less than 1 mm, less than 0.5 mm or less than 0.1 mm is expedient. In the process, meat fibres can be comminuted to the dimensions stated. Since, however, sinews, ligaments, twisted connective tissue membranes and similar elements are very difficult to comminute, because of their structure and strength, they may remain with little comminution or uncomminuted in the otherwise comminuted meat. Pieces of bone or cartilage with a minimum length of 0.3 mm, 1 mm, 5 mm or 10 mm may be contained in the comminuted material.

It may be contemplated in this context that, in addition to the proportion of pieces of bone or cartilage which are in any case present in the meat or fish to be processed, an additional pro-portion may be added as well, which may come, for example, from the processing of meat into products in which a content of pieces of bone or cartilage is undesirable and from which the latter are removed.

A sample recipe for the production of a foamed meat product or fish will now be explained. A portion of meat and animal by-products (especially poultry liver, poultry gizzards, poultry separator meat, poultry necks, poultry carcasses, pigs' stomachs, pigs' lungs) amounts to approx. 45 to 55 % by weight, especially 52 % by weight. Water is added in a proportion of approx. 30 to 40 % by weight, especially 36 % by weight. Water is added in a proportion of approx. 30 to 40 % by weight, especially 36 % by weight. Emulsifiers and salts are also add-ed.

A first pump 4 conveys the comminuted meat to a mixer 6, in which additives are metered in as required and depending on the recipe and mixed with the meat. Examples of such additives are water, fat, oil, salt, ice, emulsifiers, spices, gels or also plant components such as leaves, fibres, vegetables, cereals, starch, hydrocolloids, proteins, minerals, colorants and preservatives in comminuted or uncomminuted form.

A second pump 12 conveys the meat preparation further to a fine mincing apparatus 14, which forms an emulsifying station at the same time.

After the mixture emerges from the emulsifier 14 and, where applicable, from a further pump 12, a gas with which the meat preparation is to be foamed is supplied at a gas inlet 16. In principle, any gas suitable for use with foodstuffs may be used for this purpose, such as helium, hydrogen, nitrogen, oxygen, argon, NH₃, N₂O, CO₂, air etc., though those gases are particularly suitable which are both inert, i.e. oxygen-free in particular, and which exhibit the lowest possible solubility in water, or in the meat preparation to be foamed. Nitrogen exhibits considerably lower solubility than CO₂ and is therefore preferable in principle.

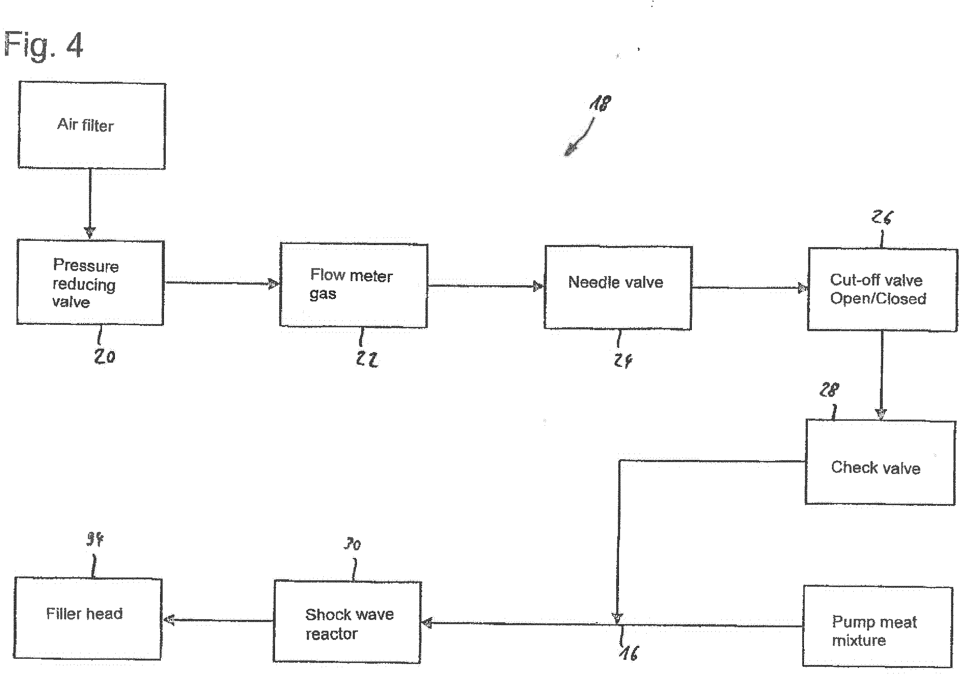

A gas-supply unit, here for example a pressure-swing adsorption unit 18 (Fig. 4), supplies pressurised nitrogen via an air filter, a pressure reducing valve 20, a flow meter 22, a needle valve 24, a cut-off valve 26 and a check valve 28 to the gas inlet 16, where the gas enters the comminuted and emulsified meat preparation in metered form.

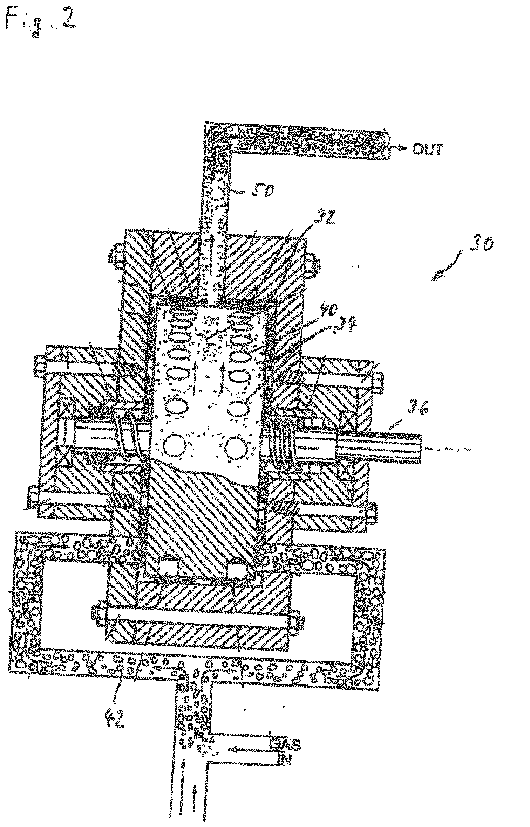

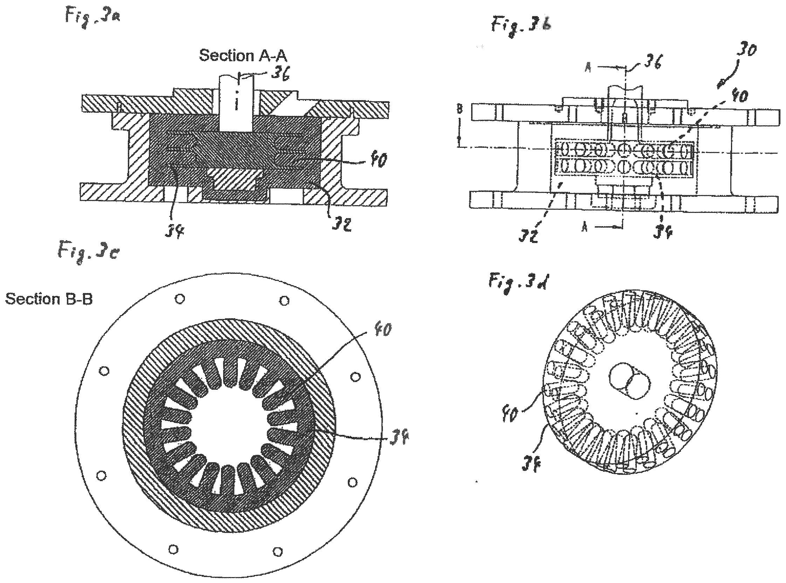

The gas/meat mixture is fed to a dispersing apparatus 30 in the form of a shock wave reactor, in which the gas is dispersed into small gas bubbles. The structure and action of the dispersing apparatus 30 are explained by Figs. 2 and 3.

Fig. 2 shows a first embodiment of the dispersing apparatus 30 (shock wave reactor) and Fig. 3 a second embodiment in various views, which consists substantially of a cylindrical chamber 32 closed on all sides, in which a rotor 34 is mounted so as to be rotatable about an axis of rotation 36. The rotor 34 is likewise cylindrical and is spaced apart on all sides from the peripheral and end walls of the chamber 32, so that the space formed in this way (free chamber volume) is filled with the gas/meat mixture to be processed.

Arranged on the periphery of the rotor 34 are a number of radially aligned bore holes 40, which lead in a manner known *per se* to the formation of cavitation bubbles, which collapse and generate shock waves, which then in turn lead to a fine dispersion of the gas supplied. The dispersion process is indicated in Fig. 2 in that the gas supplied is present in relatively large bubbles 42, whereas the product emerging contains finely dispersed gas bubbles, which are merely hinted at in Fig. 2.

The cavitation bubbles formed collapse principally in the interior of the bore holes 40 and lead to extremely great shear forces and pressure waves, which result not only in a particularly fine dispersion of the gas supplied, but also in a relatively uniform size distribution or in a limited scatter in the size distribution of the gas bubbles formed.

When the dispersing apparatus 30 is started or restarted, the desired product quality is not obtained immediately, but experience has rather shown that about 1 to 2 times, preferably 1.5 times the free chamber volume must be passed through the dispersing apparatus before a steady operating state is reached. In order to avoid having to reject as waste the material produced during such a starting-up period which does not meet the requirements, a return line 44 and optionally a further pump 12 is provided, with which the material can be circulated via the dispersing apparatus 30. A cooling apparatus 46 ensures that the heat introduced into the product by the dispersing apparatus 30 is removed, because the gas bubble content means that heating of the product is undesirable, and also that emulsified fats remain largely solid. A temperature of less than 45° C, preferably less than 35° C, 250 C, 20° C, 17° C, 15° C, 12° C or between 2° C and 8° C, and especially 5° C is appropriate. During the recirculation of the product, neither gas nor meat preparation is delivered.

Material emerging from the dispersing apparatus 30 can be recirculated not only in the course of a starting-up process, but also, if the need arises, in the event of a delay in the filling area, so that the dispersing apparatus does not need to be switched off in such cases. In particular, it is appropriate to cool the recirculated material with the cooling apparatus 46 in such a case.

In addition, it is possible to arrange a buffer container in any convenient location downstream of the dispersing apparatus 30, such as after the mixing head 82 or immediately before the filler head 94, which makes it possible to receive a certain amount of the foamed meat or fish product, such as 10, 20, 50 or 100 times a filling amount envisaged for a container, so that a corresponding number of containers can be filled from the buffer container. Since it is inexpedient to cut off the dispersing apparatus, its throughput cannot as a rule be adjusted exactly to the flow of material which is filled through the filler head 94 averaged out over time, so that it constitutes an advantageous alternative to have the possibility of allowing the dispersing apparatus 30 to run in cycles until the buffer container is filled, then to switch it off and only to switch it back on when the buffer container has been emptied to a set residual level, such as 5 % or 10 % of its capacity.

Two branches 52, 53 are arranged downstream of an outlet 50 from the dispersing apparatus 30, the first branch 52 leading to the cooling apparatus 46, and a first partial flow branch 54 and a second partial flow branch 56 following on from the second branch 53. The first partial flow branch 54 can be closed off with a cut-off valve.

First of all, an inlet 60 for additives is provided in the second partial flow branch 56, to which a colorant metering pump 62 is connected in the example illustrated. Alternatively, any other additive could be introduced at this point, e.g. vegetable or cereal paste, gels, aspic, gravy, dairy products, hydrocolloids, starch, proteins, minerals, colorants and preservatives, and/or a meat or fish emulsion or a suspension containing pieces of meat or fish can be dispersed in.

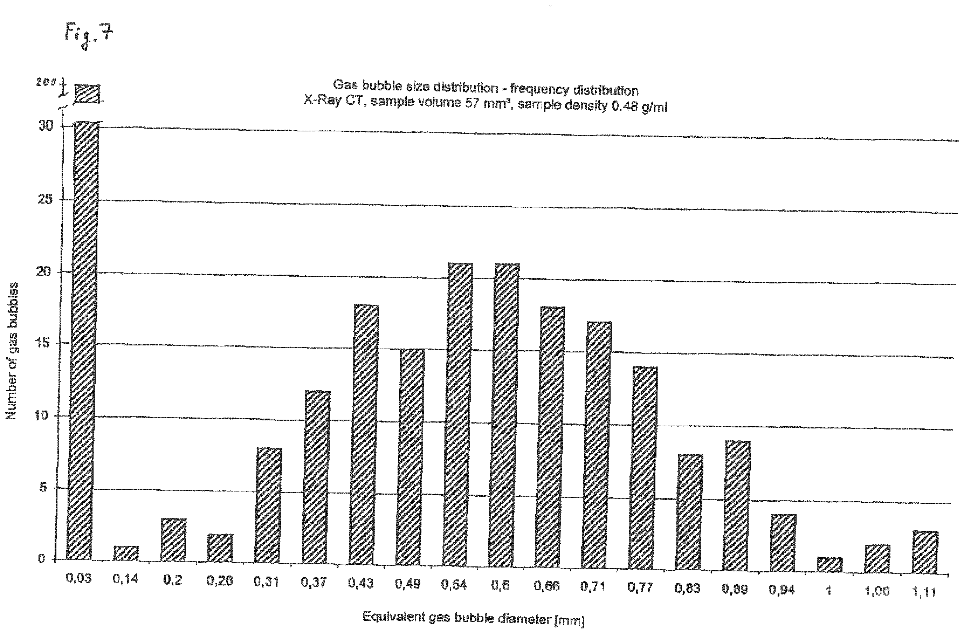

After the inlet 60 comes a static mixing unit 64, in which a series of static mixing members 66 are arranged. Fig. 7 shows a static mixing member 66 in different views, the mixing member consisting substantially of a length of cylindrical pipe with mixing surfaces 68 arranged radi-ally and axially and pointing inwards, and with a mixing finger 70 arranged between them.

When the throughput is sufficient, a good mixing effect results, so that the additive previously introduced is mixed with the foamed meat product. When the throughput is low, a dispersing effect is caused. Because of the arrangement of the inclined mixing surfaces pointing down-stream and the mixing fingers, fibre-like or chunky parts of the foamed meat or fish product, such as pieces of bone or cartilage and any sinews, ligaments etc. that might be contained in it, can move through the mixing members with no difficulty and do not become caught. Preferably, a number of mixing members 66 are arranged in series, especially offset from one another by 90°, as is made clear by positioning projections 72 and corresponding positioning recesses 74 offset from them by 90°, which are disposed on the respective axial ends of a mixing member and with which two adjacent mixing members can be coupled in a positive fit.

The first partial flow branch 54 is coupled to a first inlet 80 of a mixing head 82, while the second partial flow branch 56 is coupled to a second inlet 84 of the mixing head 82.

In operation, it can be contemplated that 50 % to 95 %, such as 85 %, of the material exiting the dispersing apparatus 30 flows through the first partial flow branch 54, while the remaining portion flows through the second partial flow branch 56 and the static mixing unit 64.

A filler head 94 serving as a metering apparatus follows the mixing head 82. In this context, it is proposed that the material exiting the dispersing apparatus 30 is introduced into the filler head 94 via a back-pressure valve 95 and a static mixing unit 64. The arrangement of a back-pressure valve has the advantage that upstream, i.e. in the dispersing apparatus 30, a particular minimum pressure can be maintained, e.g. at least 1.5 bar or a pressure between 2 and 2.5 bar. At least one pressure sensor 98 and a density measuring device 97 are provided in order to ensure that as far as the filler head 94 an overpressure of approx. 0.5 to 6 bar, preferably 1 to 4 bar and more preferably 1.5 to 3 bar prevails within the material conveyed. The reason why this is important is that, because of the gas content, the foamed material must as far as possible not be exposed to a partial vacuum in certain cases, in order not to impair the gas bubble structure.

Alternatively, a conventional filling apparatus can be installed downstream of the mixing head, with an intake and dispensing station, at which material coming from the mixing head is optionally drawn in in metered amounts and dispensed in metered amounts.

Beneath the filler head there are scales, with which the filling of a particular container 102 is monitored and the filling procedure is terminated. Downstream of the filler head, there is a metering apparatus 106 for chunky additives. After that are positioned closing, sealing and sterilisation devices.

After part of the available filling volume of the container 102, e.g. 70 % to 90 % of it, has been filled with the foamed meat product, the rest of the available filling volume, or part of it, can be filled with chunky additives such as vegetables, fruit, cereals, pieces of meat, slaughterhouse by-products, meat analogues, pieces of fish, fish analogues, surimi, pieces of egg, pieces of fruit, nuts or pieces of nut.

The invention is suitable for implementing various product concepts, such as a) meat or fish foam with nothing added, b) meat foam with vegetables and/or cereals added, c) meat foam with vegetable or cereal pastes introduced in a marbled pattern, the density of which is approx. 1 g/ml, d) meat foam with pieces of meat mixed in, slaughterhouse by-products and/or meat analogues (chunks), e) meat foam with pieces of meat and/or meat analogues in layers at the top or bottom, f) meat foam with a layer of gel/aspic at the top or bottom, which may also contain pieces of meat, meat analogues, pieces of vegetable or cereals, g) meat foam with pieces of meat, pieces of vegetable or meat analogues in layers at the top or bottom, which are present in a gravy, h) meat foam containing pieces of egg mixed in or in layers at the top or bottom, possibly in gravy or in gel/aspic, i) meat foam containing individual food-stuffs mixed in or in layers at the top or bottom, possibly in gravy or in gel/aspic (individual foods: meat or animal by-products, milk and dairy products, eggs and egg products, oils and fats, yeasts, fish and fish by-products, cereals, vegetables, vegetable by-products, vegetable protein extracts, minerals, sugar, fruits, nuts, seeds, algae, molluscs and crustaceans, insects, bakery products).

One method of detecting connective tissue in fresh meat has been further developed on the basis of Strange and Whiting (Strange E. D., Whiting, R. C., "Effects of added connective tissues on the sensory and mechanical properties of restructured beef steaks", Meat Science 27, (1990) pp. 61-74) for detecting pieces of bone or cartilage even in heat-treated, foamed fish/meat products:

### Materials:

- 500 ml measuring cup
- 5 % NaOH
- 15 % H₃PO₄
- sieve (mesh width: 0.3 mm)
- IKA colloid mill (radial gap 0.398 mm, speed 2,500 1/min)
- Krups hand mixer with whisks (stage 1)
- analytical balance (Chemical Lab, ± 0.0001 g)
- drying cabinet
- desiccator
- side jet compactor (6 bar)
- vacuum filtration unit

### Method:

1. Dry sieve in the drying cabinet (1h, 104° C), allow to cool in the desiccator for 30 min and weigh
2. Determine the dry mass (DM in %) of the sample
3. Weigh sample (15 g, P) in measuring cup and add 100 ml 5 % NaOH
4. Mix sample with hand mixer for 30 s
5. Comminute the suspension through the IKA colloid mill. In order to avoid residue, rinse IKA with 300 ml 5 % NaOH.
6. Leave suspension to stand for 5 h
7. Clamp sieve in vacuum filtration unit and filter suspension
8. Rinse with approx. 500 ml water
9. Rinse sieve first with approx. 400 ml 15 % H₃PO₄ and then again with approx. 500 ml water
10. Dry sieve in the drying cabinet for approx. 1 h at 104° C (until constant weight is reached) and weigh the dry mass (R)
11. Allow to cool in the desiccator (30 min) and then weigh
12. Express the results:
   proportion of pieces of bone and cartilage [ > 0.30 mm; %] = ((R) x 100) / ((DM in %) x (P))

Proportions of pieces of bone or cartilage found in this way in foamed products before and after sterilisation:

**Table 1**

| | Dry mass of proportion of bone and connective tissue determined by washing out over 0.3 mm sieve. Shown in % by weight of the dry mass of the foamed end product investigated | | | | Recovery rate of bone and connective tissue, after sterilisation [%] |
|---|---|---|---|---|---|
| | before sterilisation | | after sterilisation | | after sterilisation |
| Foamed meat/fish product | Average | 95 % confidenc e interval | Average | 95 % confidenc e interval | Average |
| | [%] | +/[96] | [%] | +/-[%] | [96] |
| with poultry heads/ feet | 15.832 | 3.313 | 6.500 | 0.698 | 41.06 |
| with poultry necks | 13.056 | 0.721 | 6.233 | 2.717 | 47.74 |
| with poultry carcasses | 15.636 | 3.386 | 4.525 | 0.923 | 28.94 |

After sterilisation, it is regularly the case that lower values are obtained, because some of the collagen from the pieces of bone or cartilage are degraded during sterilisation into water-soluble gelatine.

**Table 2**

| | Dry mass of proportion of bone and connective tissue determined by washing out over 0.3 mm sieve. Shown in % by weight of the dry mass of the foamed end product investigated | | | | Recovery rate of bone and connective tissue, after sterilisation [%] |
|---|---|---|---|---|---|
| | before sterilisation | | after sterilisation | | after sterilisation |
| | Average | 95% confidenc e interval | Average | 95 % confidenc e interval | Average |
| | [%] | +/-[%] | [%] | +/- [%] | [%] |
| Poultry heads / feet | 21.297 | 1.830 | 6.816 | 1.112 | 32.00 |
| Poultry necks | 10.498 | 0.916 | 2.565 | 0.502 | 24.44 |
| Poultry carcasses | 16.021 | 0.904 | 3.488 | 0.345 | 21.77 |

Table 2 shows the proportions and recovery rates of pieces of bone or cartilage for different types of meat after comminution and evaluation by the analytical method described (without foaming).

The high proportion of larger components (larger than 0.30 mm) before foaming makes it clear how necessary it is to use a method that can process high viscosities irrespective of the fibres or pieces and which ensures a fine gas distribution.

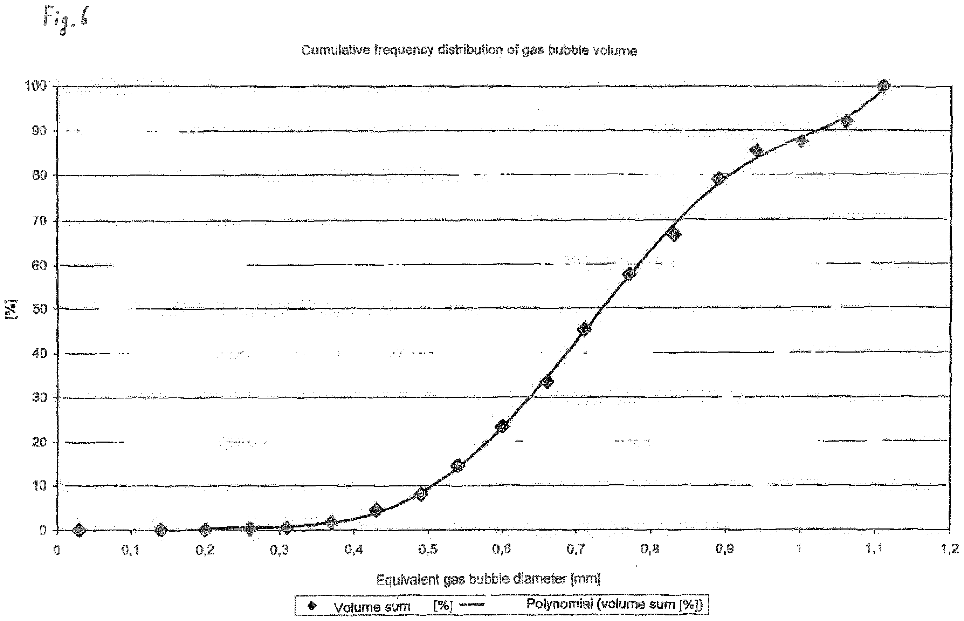

Figs. 6 and 7 show a cumulative frequency distribution and a detailed gas bubble size distribution.

The diameters of the gas bubbles of equal volume d_{3.2} range in the sterilised foam from approx. 20 - 2,000 µm diameter. The mean was approx. 0.73 mm diameter.

The Reynolds numbers when mixing or dispersing other pumpable components into the foam were determined to lie in the range 0.0010 < Re < 0.0150.

Pumpable component (vegetable paste): 0.0023 < Re < 0.0051.

Average Re number at the mixing point: 0.0140 < Re < 0.3000.

The fluctuations are due to the formation of the average speeds: In one case, the average was formed over the mass, and in the second calculation it was formed over the flow surfaces.

Recipe information (survey of the examples explained):

| | Example 1 | Example 2 | Example 3 |
|---|---|---|---|
| | Foamed meat product containing bone | Foamed meat product containing bone, with fish | Foamed meat product containing bone, with fish |
| Vitamin/mineral/nutrition mix: | 1.80 | 2.00 | 2.70 |
| Emulsifiers (alone or in combination from register of feed additives) | 1.00 | 1.00 | 1.00 |
| Vegetable fibre powder (SBP, cellulose) | 3.00 | 1.30 | 3.00 |
| Hydrocolloid, CMC | 0.20 | 0.20 | 0.30 |
| Pigs' blood plasma powder | 2.00 | 1.50 | 2.00 |
| Turkey separator meat | 5.00 | 5.00 | 4.00 |
| Chickens' feet | 6.00 | 6.00 | 6.00 |
| Poultry heads and feet | 12.00 | | |
| Poultry necks | | 12.00 | |
| Poultry carcasses | | | 11.00 |
| Chicken liver | 14.00 | 13.00 | 13.00 |
| Pigs' lungs | 15.00 | 13.00 | 12.00 |
| Trout by-products | | | 6.00 |
| Salmon by-products | | 7.00 | |
| Water | 40.00 | 38.00 | 39.00 |
| | | | |
| Total: | 100.00 | 100.00 | 100.00 |

### Example 1: Foamed meat product (batch size 80 kg)

| | |
|---|---|
| Vitamin/mineral/nutrition mix: | 1.80 % |
| Emulsifiers (individually or a combination of substances in accordance with the list of emulsifiers for animal feed from "Community Register of Feed Additives pursuant to Regulation (EC) No 1831/2003, Appendices 3 & 4, Annex : List of additives (Status: Released 21 May 2010)") | |
| | 1.00 % |
| Vegetable fibre powder (SBP, cellulose) | 3.00 % |
| Hydrocolloid 0.20 % (e.g. CMC carboxymethyl cellulose or individual or a combination of substances from the list of additives for animal feed from "Community Register of Feed Additives pursuant to Regulation (EC) No 1831/2003, Appendices 3 & 4, Annex : List of additives (status: Released 21 May 2010.)" | |
| Pigs' blood plasma powder | 2.00 % |
| Turkey separator meat | 5.00 % |
| Chickens' feet | 6.00 % |
| Poultry heads and feet | 12.00 % |
| Chicken liver | 14.00 % |
| Pigs' lungs | 15.00 % |
| Water | 40.00 % |

### Process information:

All the meat is frozen (-18° C) and comminuted to approx. 20 x 20 mm.

In a paddle mixer:
1st step: mix meat with minerals for 3 minutes.
2nd step: add half the water (30° C) and mix for a further 2 minutes.
3rd step: add remaining dry ingredients, rotate for 1 minute in each direction.
4th step: add emulsifier and remaining water.
Before emptying, mix for approx. one minute to drain. Total mixing time approx. 10 min.
The meat mix is now at a temperature of approx. +2° C and is emulsified in an emulsifying apparatus through a combination of blades and 1.5 mm perforated disks. The mixture is now at a temperature of approx. 5° C.
The mixture is then conveyed with a mass flow of 2.2 kg/min, with the addition of 2.21 nitro-gen or compressed air through a shock wave reactor (ex HydroDynamics, Rome, Georgia, US). The speed of the rotor is 1,800 r.p.m. The rotor has a diameter of 304.8 mm and a width of 50.75 mm. 2 parallel rows of holes, each with 30 holes, are arranged on the circumference. The individual holes have a diameter of 18.8 mm and a depth of 50 mm. The volume of a hole is 13.5 ml. The distance between the circumference of the rotor and the fixed housing is ¼" = 6.4 mm.

The temperature of the foam obtained in this way is 32.0° C. At this temperature, the foam can be filled directly, controlled by gravimetry, volumetry or pressure. The density of the foam produced is 0.5 kg/l.

After the foam has been filled in a suitable container (tin, bowl, pouch), and the latter has been sealed and sterilised thermally (T > 110° C), a stable product is obtained (fully preserve-ed), which can be stored at room temperature for at least 2 years. The stable foam product is characterised by a homogeneous distribution of the gas bubbles, a moist, shiny, solid foam texture and a high level of acceptance by pets.

### Example 2: Foamed meat product with fish (batch size 80 kg)

| | |
|---|---|
| Vitamin/mineral/nutrition mix: | 2.00 % |
| Emulsifiers (individually or a combination of substances in accordance with the list of emulsifiers for animal feed from "Community Register of Feed Additives pursuant to Regulation (EC) No 1831/2003, Appendices 3 & 4, Annex : List of additives (status: Released 21 May 2010.)" | |
| | 1.00 % |
| Vegetable fibre powder (SBP, cellulose) | 1.30 % |
| Hydrocolloid | 0.20 % (as in Example 1) |
| Pigs' blood plasma powder | 1.50 % |
| Turkey separator meat | 5.00 % |
| Chickens' feet | 6.00 % |
| Poultry necks | 12.00 % |
| Chicken liver | 13.00 % |
| Pigs' lungs | 13.00 % |
| Salmon by-products | 7.00 % |
| Water | 38.00 % |

### Process information:

All the meat and fish materials are frozen (-18° C) and comminuted to approx. 20 x 20 mm.
In a paddle mixer:
1st step: mix meat with minerals for 3 minutes.
2nd step: add half the water (30° C) and mix for a further 2 minutes.
3rd step: add remaining dry ingredients, rotate for 1 minute in each direction.
4th step: add emulsifier and remaining water.
Before emptying, mix for approx. one minute to drain. Total mixing time approx. 10 min.
The meat/fish mixture is now at a temperature of approx. +2° C and is emulsified in an emulsifying apparatus through a combination of blades and 1.5 mm perforated disks. The mixture is now at a temperature of approx. 5° C.
The mixture is then conveyed with a mass flow of 2.0 kg/min, with the addition of 2.01 nitro-gen or compressed air through a shock wave reactor (ex HydroDynamics, Rome, Georgia, US). The speed of the rotor is 2,200 r.p.m. The rotor has a diameter of 266 nun and a width of 50.75 mm. 2 parallel rows of holes, each with 24 holes, are arranged on the circumference. The individual holes have a diameter of 18.8 mm and a depth of 50 mm. The volume of a hole is 13.5 ml. The distance between the circumference of the rotor and the fixed housing is ¼" = 6.4 mm.

The temperature of the foam obtained in this way is 31.0° C. At this temperature, the foam can be filled directly, controlled by gravimetry, volumetry or pressure. The density of the foam produced is 0.5 kg/l.

After the foam has been filled in a suitable container (tin, bowl, pouch), and the latter has been sealed and sterilised thermally (T > 110° C), a stable product is obtained (fully preserved), which can be stored at room temperature for at least 2 years. The stable foam product is characterised by a homogeneous distribution of the gas bubbles, a moist, shiny, stable foam texture and a high level of acceptance by pets.

### Example 3: Foamed meat product with fish (batch size 80 kg)

| | |
|---|---|
| Vitamin/mineral/nutrition mix: | 2.70 % |
| Emulsifiers (individually or a combination of substances in accordance with the list of emulsifiers for animal feed from "Community Register of Feed Additives pursuant to Regulation (EC) No 1831/2003, Appendices 3 & 4, Annex : List of additives (status: Released 21 May 2010.)" | |
| | 1.00 % |
| Vegetable fibre powder (SBP, cellulose) | 3.00 % |
| Hydrocolloid | 0.30 % (as in Example 1) |
| Pigs' blood plasma powder | 2.00 % |
| Turkey separator meat | 4.00 % |
| Chickens' feet | 6.00 % |
| Poultry carcasses | 11.00 % |
| Chicken liver | 13.00 % |
| Pigs' lungs | 12.00 % |
| Trout by-products | 6.00 % |
| Water | 39.00 % |

### Process information:

All the meat and fish materials are frozen (-18° C) and comminuted to approx. 20 x 20 mm.
In a paddle mixer:
1st step: mix meat with minerals for 3 minutes.
2nd step: add half the water (30° C) and mix for a further 2 minutes.
3rd step: add remaining dry ingredients, rotate for 1 minute in each direction.
4th step: add emulsifier and remaining water.
Before emptying, mix for approx. one minute to drain. Total mixing time approx. 10 min.
The meat/fish mixture is now at a temperature of approx. +2° C and is emulsified in an emulsifying apparatus through a combination of blades and 1.5 mm perforated disks. The mixture is now at a temperature of approx. 5° C.

The mixture is then conveyed with a mass flow of 2.0 kg/min, with the addition of 2.01 nitro-gen or compressed air through a shock wave reactor (ex HydroDynamics, Rome, Georgia, US). The speed of the rotor is 1,500 r.p.m. The rotor has a diameter of 203 mm and a width of 50.75 mm. 2 parallel rows of holes, each with 18 holes, are arranged on the circumference. The individual holes have a diameter of 18.8 mm and a depth of 50 mm. The volume of a hole is 13.5 ml.
The distance between the circumference of the rotor and the fixed housing is 1" = 25.4 mm.

The temperature of the foam obtained in this way is 21.0° C. At this temperature, the foam can be filled directly, controlled by gravimetry, volumetry or pressure. The density of the foam produced is 0.5 kg/l.

After the foam has been filled in a suitable container (tin, bowl, pouch), and the latter has been sealed and sterilised thermally (T > 110° C), a stable product is obtained (fully preserved), which can be stored at room temperature for at least 2 years. The stable foam product is characterised by a homogeneous distribution of the gas bubbles, a moist, shiny, stable foam texture and a high level of acceptance by pets.

It is possible to use the following permitted additives:

### Emulsifiers for animal feed from: "Community Register of Feed Additives pursuant to Regulation (EC) No 1831/2003, Appendices 3 & 4, Annex : List of additives (status: Released 21 May 2010.)"

| EC No. | Additives: Emulsifiers |
|---|---|
| E 322 | Lecithins |
| E 432 | Polyoxyethylene(20) sorbitan monolaurate |
| E 433 | Polyoxyethylene(20) sorbitan mono-oleate |
| E 434 | Polyoxyethylene(20) sorbitan monopalmitate |
| E 435 | Polyoxyethylene(20) sorbitan monostearate |
| E 436 | Polyoxyethylene(20) sorbitan tristearate |
| E 471 | monoglycerides and diglycerides of edible fatty acids |
| E 472 | monoglycerides and diglycerides of edible fatty acids esterified with: |
| a) | acetic acid |
| b) | lactic acid |
| c) | citric acid |
| d) | tartaric acid |
| e) | monoacetyl and diacetyl tartaric acid |
| E 473 | Sugar esters (esters of sucrose and edible fatty acids) |
| E 474 | Sugar glycerides (mixture of sucrose esters and monoglycerides and diglycerides of edible fatty acids) |
| E 475 | Polyglycerol esters of edible fatty acids |
| E 477 | Monoesters of propylene glycol (1,2-propane diol) and of edible fatty acids, alone or mixed with diesters |
| E 480 | Stearyl-2-lactylic acid |
| E 481 | Sodium stearyl lactyl-2-lactate |
| E 482 | Calcium stearyl lactyl-2-lactate |
| E 483 | Stearyl tartrate |
| E 484 | Polyethylene glycol glyceryl ricinoleate |
| E 487 | Polyethylene glycol soya oil fatty acid ester |
| E 488 | Polyethylene glycol glyceryl tallow fatty acid ester |
| E 489 | Polyglycerol ether with the alcohols obtained by reducing oleic acid and palmitic acid |
| E 491 | Sorbitan monostearate |
| E 492 | Sorbitan tristearate |
| E 493 | Sorbitan monolaurate |
| E 494 | Sorbitan mono-oleate |
| E 495 | Sorbitan monopalmitate |
| E 496 | Polyethylene glycol 6000 |
| E 497 | Polymers of polyoxypropylene/polyoxyethylene (MW 6,800-9,000) |
| E 498 | Partial polyglycerol esters of polycondensed fatty acids of castor oil |

### Thickening and gelling agents for animal feed from: "Community Register of Feed Additives pursuant to Regulation (EC) No 1831/2003, Appendices 3 &4,

### Annex: List of additives (status: Released 21 May 2010.)"

| EC No. | Additives: |
|---|---|
| E 400 | Alginic acid |
| E 401 | Sodium alginate |
| E 402 | Potassium alginate |
| E 403 | Ammonium alginate |
| E 404 | Calcium alginate |
| E 405 | Propylene glycol alginate (1,2-propane diol alginate) |
| E 406 | Agar-agar |
| E 407 | Carrageenan |
| E 410 | Locust bean gum |
| E 411 | Tamarind seed flour |
| E 412 | Guar gum |
| E 413 | Gum traganth |
| E 414 | Gum arabic |
| E 415 | Xanthan gum |
| E 418 | Gellan gum |
| E 440 | Pectins |
| E 460 | Microcrystalline cellulose |
| E 460(ii) | Cellulose powder |
| E 461 | Methyl cellulose |
| E 462 | Ethyl cellulose |
| E 463 | Hydroxypropyl cellulose |
| E 464 | Hydroxypropyl methyl cellulose |
| E 465 | Methyl ethyl cellulose |
| E 466 | Carboxymethyl cellulose (sodium salt of the cellulose carboxymethyl ether) |
| E 470 | Sodium, potassium or calcium salts of edible fatty acids, alone or mixed, obtained either from edible fats or from distilled edible fatty acids |
| E 486 | Dextrans |
| E 498 | Partial polyglycerol esters of polycondensed fatty acids of castor oil |
| E 499 | Cassia gum |

### List of reference numerals

- 2: Comminution apparatus
- 4: First pump
- 6: Mixer
- 8: Second pump
- 12: Third pump
- 16: Gas inlet
- 18: Pressure-swing adsorption unit
- 20: Pressure reducing valve
- 22: Flow meter
- 24: Needle valve
- 26: Cut-off valve
- 28: Check valve
- 30: Dispersing apparatus
- 32: Chamber
- 34: Rotor
- 36: Axis of rotation
- 40: Bore hole
- 42: Gas bubble
- 44: Return line
- 46: Cooling apparatus
- 50: Outlet
- 52: Branch
- 54: First partial flow branch
- 56: Second partial flow branch
- 60: Inlet
- 62: Colorant metering pump
- 64: Static mixing unit
- 66: Static mixing member
- 68: Mixing surface
- 70: Mixing finger
- 72: Positioning projection
- 74: Positioning alignment
- 80: First inlet
- 82: Mixing head
- 84: Second inlet
- 94: Filler head
- 95: Back-pressure valve
- 97: Density measuring device
- 98: Pressure sensor
- 102: Container
- 106: Metering apparatus

## Claims

1. A foamed meat or fish product, containing comminuted meat or fish and pieces of bone or cartilage, obtainable by
a process comprising the steps of:
- feeding a pumpable starting material, containing comminuted meat or fish and pieces of bone or cartilage to a dispersing apparatus (30) having a chamber (32) and a cylindrical rotor (34) positioned therein, which has a number of indentations (40) arranged on its circumference for creating cavitation,
- feeding a gas to the dispersing apparatus (30),
- operating the dispersing apparatus (30) while generating cavitation and dispersing the starting material with the gas supplied, in the process of which the pieces of bone or cartilage are passed through the chamber (32), and generating a foamed meat or fish product containing pieces of bone or cartilage, wherein the meat or fish product is sterilised and has an average gas bubble size from 0.1 to 7 mm, a density of 0.3 to 0.95g/ml and a weight ratio of pieces of bone or cartilage based on the dry substance with a largest dimension (length or diameter) of more than 0.3 mm of 0.10 % by weight to 25 % by weight.

2. The meat or fish product as claimed in claim 1, **characterised in that** additives such as water, fat, oil, salt, emulsifiers, spices, gels, plant components, leaves or fibres, vegetables, cereals, starch, hydrocolloids, proteins, minerals, colorants and preservatives in comminuted or uncomminuted form are fed into the starting material, before or after its entry into the dispersing apparatus (30).

3. The meat or fish product as claimed in claim 1 or 2, **characterised in that** before the entry of the starting material into the dispersing apparatus (30), it is brought to a temperature of 2° C to 8° C, especially 5° C.

4. The meat or fish product as claimed in any of claims 1 to 3, **characterised in that** an additive is added to a partial flow of the meat product produced after it exits the dispersing apparatus (30), and is passed through a static mixing unit (64), wherein the partial flow, after exiting the static mixing unit (64), is fed, together with another partial flow of the meat product produced, to a mixing head (82), and differently composed partial strands of a flow of material produced are formed.

5. The meat or fish product as claimed in any of claims 1 to 4, **characterised in that**, especially in the event of an interruption of a filling process, the meat product produced is circulated from the output of the dispersing apparatus (30) via a cooling apparatus (46) to the inlet of the dispersing apparatus (30).

6. The meat or fish product as claimed in any of claims 1 to 5, **characterised in that** the meat product is sterilised at a temperature of at least 110° C for at least 10 minutes.

7. The meat or fish product as claimed in any of the claims 1 to 6, **characterised in that** during operation of the metering apparatus (30), a buffer container is filled with foamed meat or fish product, the metering apparatus (30) is no longer operated after a predetermined filling level of the buffer container is reached, foamed meat or fish product is re-moved from the buffer container to fill containers, and after a predetermined emptying level of the buffer container is reached, the metering apparatus (30) is operated again, and the buffer container is again filled until the predetermined filling level is reached.

## Patentansprüche

1. Ein geschäumtes Fleisch- oder Fischprodukt, das zerkleinertes Fleisch oder Fisch und Stücke von Knochen oder Knorpel enthält, erhältlich durch
ein Verfahren, das die Schritte umfasst:
- Zuführen eines pumpfähigen Ausgangsmaterials, enthaltend zerkleinertes Fleisch oder Fisch und Knochen- oder Knorpelstücke, zu einer Dispergiervorrichtung (30), die eine Kammer (32) mit einem darin angeordneten zylindrischen Rotor (34) aufweist, der auf seinem Umfang mit einer Anzahl von Vertiefungen (40) zur Kavitationserzeugung versehen ist,
- Zuführen eines Gases zu der Dispergiervorrichtung (30),
- Betreiben der Dispergiervorrichtung (30) unter Kavitationserzeugung und Dispergierung des Ausgangsmaterials mit dem zugeführten Gas, wobei die Knochen- oder Knorpelstücke durch die Kammer (32) hindurchgeführt werden, und Erzeugen eines aufgeschäumten, Knochen- oder Knorpelstücke enthaltenden Fleisch- oder Fischprodukts,
wobei das Fleisch- oder Fischprodukt sterilisiert ist und eine durchschnittliche Gasblasengröße von 0,1 bis 7 mm, eine Dichte von 0,3 bis 0,95 g/ml und ein Gewichtsverhältnis von Knochen- oder Knorpelstücken basierend auf der Trockensubstanz mit einer größten Abmessung (Länge oder Durchmesser) von mehr als 0,3 mm von 0,10 Gew .-% bis 25 Gew .-% hat.

2. Fleisch- oder Fischprodukt nach Anspruch 1, **dadurch gekennzeichnet, dass** Zusatzstoffe wie Wasser, Fett, Öl, Salz, Emulgatoren, Gewürze, Gele, Pflanzenbestandteile, Blätter oder Fasern, Gemüse, Getreide, Stärke, Hydrokolloide, Proteine, Mineralien, Farbstoffe und Konservierungsmittel in zerkleinerter oder nicht zerkleinerter Form in das Ausgangsmaterial vor oder nach seinem Eintritt in die Dispergiervorrichtung (30) zugeführt werden.

3. Fleisch- oder Fischprodukt nach Anspruch 1 oder 2, **dadurch gekennzeichnet, dass** das Ausgangsmaterial vor dem Eintritt in die Dispergiervorrichtung (30) auf eine Temperatur von 2°C bis 8°C, insbesondere 5°C gebracht wird.

4. Fleisch- oder Fischprodukt nach einem der Ansprüche 1 bis 3, **dadurch gekennzeichnet, dass** ein Teilstrom des erzeugten Fleischprodukts nach dem Austritt aus der Dispergiervorrichtung (30) mit einem Zusatzstoff versetzt und durch eine statische Mischeinrichtung (64) geführt wird, wobei der Teilstrom nach Austritt aus der statischen Mischeinrichtung (64) mit einem anderen Teilstrom des erzeugten Fleischprodukts einem Mischkopf (82) zugeführt wird und unterschiedlich zusammengesetzte Teilstränge eines erzeugten Materialstroms gebildet werden.

5. Fleisch- oder Fischprodukt nach einem der Ansprüche 1 bis 4, **dadurch gekennzeichnet, dass** insbesondere bei einer Unterbrechung eines Abfüllvorgangs das erzeugte Fleischprodukt vom Ausgang der Dispergiervorrichtung (30) über eine Kühleinrichtung (46) zum Einlass der Dispergiervorrichtung (30) im Kreis geführt wird.

6. Fleisch- oder Fischprodukt nach einem der Ansprüche 1 bis 5, **dadurch gekennzeichnet, dass** das Fleischprodukt mindestens 10 Minuten bei einer Temperatur von mindestens 110°C sterilisiert wird.

7. Fleisch- oder Fischprodukt nach einem der Ansprüche 1 bis 6, **dadurch gekennzeichnet, dass** während des Betreibens der Dosiervorrichtung (30) ein Pufferbehälter mit aufgeschäumtem Fleisch- oder Fischprodukt gefüllt wird, die Dosiervorrichtung (30) nach Erreichen eines vorgegebenen Füllungsgrades des Pufferbehälters nicht weiter betrieben wird, aus dem Pufferbehälter aufgeschäumtes Fleisch- oder Fischprodukt zum Befüllen von Behältnissen entnommen wird und nach Erreichen eines vorgegebenen Entleerungsgrades des Pufferbehälters die Dosiervorrichtung (30) erneut betrieben und der Pufferbehälter erneut bis Erreichen des vorgegebenen Füllungsgrades gefüllt wird.

## Revendications

1. Produit à base de mousse de viande ou de poisson, contenant de la viande ou du poisson haché(e) et des morceaux d'os ou de cartilage, pouvant être obtenu par
un procédé comprenant les étapes qui consistent à :
- introduire une matière de départ pompable, contenant de la viande ou du poisson haché(e) et des morceaux d'os ou de cartilage, dans un appareil de dispersion (30) muni à l'intérieur d'une chambre (32) et d'un rotor cylindrique (34), possédant un certain nombre d'échancrures (40) disposées à sa circonférence pour créer une cavitation,
- alimenter l'appareil de dispersion (30) en gaz,
- faire fonctionner l'appareil de dispersion (30) tout en produisant la cavitation et en dispersant la matière de départ avec le gaz fourni, procédé durant lequel les morceaux d'os ou de cartilage passent dans la chambre (32), et produire un produit à base de mousse de viande ou de poisson contenant des morceaux d'os ou de cartilage, dans lequel le produit à base de viande ou de poisson est stérilisé, et dont la taille moyenne des bulles de gaz est de 0,1 à 7 mm, la densité est de 0,3 à 0,95 g/ml et un rapport en poids des morceaux d'os ou de cartilage, sur la base de la substance sèche, avec une dimension la plus large (longueur ou diamètre) de plus de 0,3 mm, est de 0,10 % en poids à 25 % en poids.

2. Produit à base de viande ou de poisson selon la revendication 1, **caractérisé en ce que** des additifs tels que de l'eau, de la graisse, de l'huile, du sel, des émulsionnants, des épices, des gels, des composants végétaux, des feuilles ou des fibres, des légumes, des céréales, de l'amidon, des hydrocolloïdes, des protéines, des minéraux, des colorants et des agents de conservation sous forme hachée ou non hachée sont ajoutés à la matière de départ, avant ou après son entrée dans l'appareil de dispersion (30).

3. Produit à base de viande ou de poisson selon la revendication 1 ou 2, **caractérisé en ce que**, avant l'entrée de la matière de départ dans l'appareil de dispersion(30), il est porté à une température de 2 °C à 8 °C, en particulier à 5 °C.

4. Produit à base de viande ou de poisson selon l'une quelconque des revendications 1 à 3, **caractérisé en ce qu'**un additif est ajouté à un flux partiel du produit à base de viande produit après qu'il soit sorti de l'appareil de dispersion (30), et qu'il ait traversé une unité de malaxage statique (64), dans lequel le flux partiel, à sa sortie de l'unité de malaxage statique (64), est introduit, en même temps qu'un autre flux partiel du produit à base de viande, dans une tête de malaxage (82), et des brins partiels composés différemment d'un flux de la matière produite sont formés.

5. Produit à base de viande ou de poisson selon l'une quelconque des revendications 1 à 4, caractérisé, en particulier dans le cas d'une interruption d'un procédé de remplissage, en ce que l'on fait circuler le produit à base de viande produit entre la sortie de l'appareil de dispersion (30) en passant par un appareil dé refroidissement (46) et l'entrée de l'appareil de dispersion (30).

6. Produit à base de viande ou de poisson selon l'une quelconque des revendications 1 à 5, **caractérisé en ce que** le produit à base de viande est stérilisé à une température d'au moins 110 °C pendant au moins 10 minutes.

7. Produit à base de viande ou de poisson selon l'une quelconque des revendications 1 à 6, **caractérisé en ce que**, pendant le fonctionnement de l'appareil de dosage [R1] (30), un réservoir tampon est rempli de produit à base de mousse de viande ou de poisson, l'appareil de dosage (30) ne fonctionne plus après l'atteinte d'un niveau de remplissage prédéterminé du réservoir tampon, le produit à base de mousse de viande ou de poisson est retiré du réservoir tampon pour remplir des récipients, et après l'atteinte d'un niveau de vidange prédéterminé du réservoir tampon, l'appareil de dosage (30) est remis en fonctionnement, et le récipient tampon est à nouveau rempli jusqu'à l'atteinte du niveau de remplissage prédéterminé.
